# EUROPÄISCHE PATENTSCHRIFT

(11) **EP 4 357 632 B1**
(45) Veröffentlichungstag und Bekanntmachung des Hinweises auf die Patenterteilung: **22.04.2026**
(21) Anmeldenummer: 23202616.1
(22) Anmeldetag: 10.10.2023
(51) Int. Cl.: F16C 35/067, F16C 19/06, F16C 23/08, F16C 35/077, H02K 5/173

(54) **LAGEREINHEIT**
BEARING UNIT
UNITÉ DE PALIER

(30) Priorität: 20.10.2022 DE 102022211158
(43) Veröffentlichungstag der Anmeldung: 24.04.2024
(73) Patentinhaber: Baumüller Nürnberg GmbH, 90482 Nürnberg (DE)
(72) Erfinder: EISFELD, Paul, 90473 Nürnberg (DE); RUDEL, Manuela, 91074 Herzogenaurach (DE); VEEH, Michael, 97271 Kleinrinderfeld (DE)
(74) Vertreter: FDST Patentanwälte

(56) Entgegenhaltungen:
- EP-A1- 3 018 800
- WO-A1-2021/136834
- JP-A- 2013 070 510
- US-B2- 8 303 188

## Beschreibung

Die Erfindung betrifft eine Lagereinheit mit einem Wälzlager. Auch betrifft die Erfindung betrifft ein Verfahren zur Herstellung einer Baueinheit mit einer Lagereinheit und einen Elektromotor.

Elektromotoren weisen üblicherweise ein im Wesentlichen hohlzylindrisches Gehäuse auf, das an dessen Stirnseiten mittels jeweils eines Lagerschilds verschlossen ist, wobei eines das sogenannte A- seitige Lagerschilds ist, das sich auf der Seite des Elektromotors befindet, an dem ein Antrieb eines damit verbundenen Bauteils erfolgt. Das gegenüberliegende Lagerschild wird als B-seitiges Lagerschild bezeichnet. Die Lagerschilde selbst sind an dem Gehäuse befestigt. An jedem Lagerschild ist üblicherweise ein Wälzlager angeordnet, mittels dessen eine durch das Gehäuse geführte Welle des Elektromotors drehbar gelagert ist.

Auf Seiten des B-seitigen Lagerschilds ist das Wälzlager starr an dem Lagerschild befestigt. Mit anderen Worten handelt es sich bei diesem Wälzlager um ein Festlager. Da die thermischen Eigenschaften der einzelnen Bauteile des Elektromotors unterschiedlich sind, ist es möglich, dass sich die Welle bei zunehmender Temperatur um ein anderes Maß ausdehnt als das Gehäuse, mittels dessen der Abstand der Lagerschilde zueinander bestimmt ist. Damit sich keine mechanischen Spannungen in der Welle zwischen den beiden Lagerschilden ausbilden, ist das dem anderen Lagerschild, nämlich dem A-seitigen Lagerschild, zugeordnete Lager an diesem axialbeweglich gelagert, also entlang der Ausdehnungsrichtung der Welle. Mit anderen Worten handelt es sich hier um eine Loslager.

Zur Realisierung des Loslagers ist das Wälzlager meist nicht mittels eines Formschluss, sondern mittels eines Kraftschlusses an dem Lagerschild befestigt. Hierbei ist der Kraftschluss derart, dass bei in Axialrichtung auftretenden Kräften, die ansonsten zu einem Ausbilden von mechanischen Spannungen führen würden, eine Verschiebung des Wälzlagers an dem Lagerschild erfolgt. Zur Bereitstellung des Kraftschlusses ist beispielsweise das Wälzlager an der Außenseite mittels eines O-Rings umgeben, der aus einem elastischen Material, wie einem Kunststoff oder Gummi, erstellt ist. Das Wälzlager ist in eine topf- oder hohlzylindrische Aufnahme des Lagerschilds eingesetzt, wobei der mechanische Kontakt zwischen dem Lagerschild und dem Wälzlager lediglich oder zumindest auch über den O-Ring erfolgt.

Aufgrund einer derartigen Anbindung des Wälzlagers an dem Lagerschild ist jedoch zusätzlich zu der axialen Bewegung auch eine Rotationsbewegung des vollständigen Lagers bezüglich des Lagerschilds möglich, die beispielsweise bei einer vergleichsweise hohen Belastung des Elektromotors oder einer vorhandenen Unwucht erfolgt. Bei der Rotationsbewegung tritt jedoch Reibung zwischen dem O-Ring und dem Wälzlager und/oder dem Lagerschild auf, die zu einem ein Abrieb von einzelnen Partikeln, also einem Verschleiß, führen kann. Infolgedessen ist eine sichere Anbindung des Lagers an dem Lagerschild nicht mehr gewährleistet. Zudem kann die aufgrund der Reibung entstehende Wärme zu einer weiteren Beschädigung führen, wie zu einer Verformung des O-Rings. Auch ist es möglich, dass die Abriebpartikel in das Wälzlager eintreten und dessen Funktionsweise zumindest teilweise beeinträchtigen.

Aus JP 2013 070510 A ist eine rotierende elektrische Maschine bekannt. Diese umfasst eine rotierende Welle, die über ein Lager durch einen Rahmen drehbar gelagert ist, einen Rotor, der an der rotierenden Welle angebracht ist und sich zusammen mit der rotierenden Welle dreht, einen Stator, der an dem Rahmen so angebracht ist, dass er dem Rotor zugewandt ist, und eine Vorspannvorrichtung, die Druck auf das Lager in einer axialen Richtung der rotierenden Welle über ein Stützelement ausübt, das in der axialen Richtung der rotierenden Welle verschiebbar ist. Dieses Dokument offenbart eine Lagereinheit gemäß dem Oberbegriff von Anspruch 1.

In US 8,303,188 B2 ist eine Lagereinheit offenbart. Ein Außenring ist mit einer Keilnut versehen, die sich radial von einem Innendurchmesser zu einem Außendurchmesser an einer Endfläche desselben erstreckt. Ein Schlüsselelement umfasst einen ringförmigen Körper, einen nach innen vorstehenden Teil, der an einem Innenumfang des ringförmigen Körpers vorgesehen ist und in die Keilnut des Außenrings eingesetzt werden kann, und einen nach außen vorstehenden Teil, der an einem Außenumfang des ringförmigen Körpers vorgesehen ist und in eine Keilnut eines Achslagers eingesetzt werden kann.

EP 3 018 800 A1 zeigt einen Wechselstromgenerator für ein Fahrzeug, bei dem ein Harzgehäuse konvexe Abschnitte aufweist, die an einer äußeren Umfangsfläche des Harzgehäuses so ausgebildet sind, dass sie sich in einer axialen Richtung des Harzgehäuses erstrecken, um in Druckkontakt mit einer inneren Umfangswandfläche eines gegenläufigen antriebsseitigen Lagergehäuseabschnitts gebracht zu werden, sowie konvexe Abschnitte, die an einer inneren Umfangsfläche des Harzgehäuses so ausgebildet sind, dass sie den konvexen Abschnitten gegenüberliegen.

In WO 2021/136834 A1 ist eine elektrische Maschine offenbart. Diese umfasst einen Stator, einen Rotor und eine Lageranordnung. Der Stator umfasst eine Lagerschildanordnung mit einem Lagerschild und einem feststehenden Labyrinthdichtungsring mit einer gewundenen Labyrinthoberfläche. Der Rotor umfasst eine Rotorwelle und einen drehbaren Labyrinthdichtungsring mit einer gewundenen Labyrinthfläche, die der gewundenen Labyrinthfläche des festen Labyrinthdichtungsrings in einem axialen Abstand gegenüberliegt.

Der Erfindung liegt die Aufgabe zugrunde, eine besonders geeignete Lagereinheit und ein besonders geeignetes Verfahren zur Herstellung einer Baueinheit sowie einen besonders geeigneten Elektromotor anzugeben, wobei insbesondere eine Haltbarkeit erhöht ist, und wobei zweckmäßigerweise Herstellungskosten verringert sind.

Hinsichtlich der Lagereinheit wird diese Aufgabe durch die Merkmale des Anspruchs 1, hinsichtlich des Verfahrens durch die Merkmale des Anspruchs 5 und hinsichtlich des Elektromotors durch die Merkmale des Anspruchs 6 erfindungsgemäß gelöst. Vorteilhafte Weiterbildungen und Ausgestaltungen sind Gegenstand der jeweiligen Unteransprüche.

Die Lagereinheit weist ein Wälzlager sowie eine erstes und ein zweites Bauteil auf. Eines der oder beide Bauteile sind dabei zum Beispiel aus mehreren einzelnen Komponenten zusammengesetzt oder zweckmäßigerweise einstückig. Vorzugsweise ist zumindest eines der beiden Bauteile aus einem Metall, wie einem Aluminium, also reinem Aluminium oder einer Aluminiumlegierung, oder einem Stahl gefertigt. Auf diese Weise ist eine Robustheit erhöht. Mittels des Wälzlagers ist das erste Bauteil bezüglich des zweiten Bauteils um eine Achse drehbar gelagert. Beispielsweise ist das erste Bauteil eine Nabe und das zweite Bauteil eine feststehende Achse. Besonders bevorzugt jedoch ist das erste Bauteil eine Welle, die zum Beispiel aus einem Stahl, wie einem gehärteten Stahl, erstellt ist. Das zweite Bauteil ist beispielsweise ein Bestandteil eines Gehäuses oder vorzugsweise ein Lagerschild oder ein Bestandteil des Lagerschilds.

Beispielsweise ist die Lagereinheit ein Bestandteil eines Elektromotors oder eines Getriebes. Zweckmäßigerweise ist die Lagereinheit ein Bestandteil einer Industrieanlage oder zumindest eines Werkzeugs. Insbesondere ist die Lagereinheit ein Bestandteil einer Spritzgussmaschine, wie eines Elektromotors der Spitzgussmaschine. Vorzugsweise wird hierbei mittels der Lagereinheit bei Betrieb eine Leistung zwischen 18 kW und 150 kW übertragen.

Das Wälzlager weist einen Außenring und einen hierzu um die Achse drehbaren Innenring auf. Mittels des Außenrings ist hierbei der Innenring zweckmäßigerweise außenseitig umgeben, und der Außenring der Innenring sind vorzugsweise konzentrisch zur Achse angeordnet. Vorzugsweise sind der Innenring und der Außenring rotationssymmetrisch bezüglich der Achse ausgestaltet, sodass eine Unwucht vermieden ist. Zweckmäßigerweise sind zwischen dem Innenring und dem Außenring mehrere Wälzkörper, wie Zylinder oder Kugeln, angeordnet, über die der Innenring und der Außenring aneinander anliegen. Insbesondere sind der Innenring und der Außenring aus dem gleichen Material erstellt, beispielsweise einem Stahl. Somit weisen die im Wesentlichen die gleiche Wärmeausdehnung auf. Vorzugsweise sind die etwaigen Wälzkörper aus einem vergleichsweise robusten Material erstellt, zum Beispiel einem Stahl.

Der Innenring ist an dem ersten Bauteil befestigt. Mit anderen Worten ist das erste Bauteil bezüglich des Innenrings unbeweglich, und der Innenring ist drehfest an dem ersten Bauteil angebunden, sodass eine Drehung dieser zueinander unterbunden ist. Auch ist eine axiale Bewegung des Innenring bezüglich des ersten Bauteils verhindert. Insbesondere ist das erste Bauteil, zumindest im Bereich des Innenrings, mittels des Innenrings radial umgeben, insbesondere bezüglich der Achse. Geeigneterweise liegen der Innenring und das erste Bauteil mechanisch direkt aneinander an. Beispielsweise erfolgt das Anbringen des Innenring an dem ersten Bauteil mittels eines Klebstoffs oder mittels Befestigungsmitteln, wie Schrauben. Geeigneterweise ist der Innenring auf das erste Bauteil aufgeschrumpft. Vorzugsweise ist das erste Bauteil rotationssymmetrisch bezüglich der Achse, sodass eine Unwucht vermieden ist.

An dem Außenring ist ein Adapterring befestigt. Der Adapterring ist somit ebenfalls weder drehbeweglich bezüglich des Außenrings, noch ist es möglich, den Außenring bezüglich des Adapterrings in einer Längsrichtung, wie axial, zu bewegen, sodass diese insbesondere eine Baueinheit bildenden. Mit anderen Worten ist eine Relativbewegung des Adapterrings bezüglich des Außenrings nicht möglich oder zumindest nicht gewünscht. Insbesondere ist Adapterring konzentrisch zur Achse angeordnet.

Der Außenring selbst ist verdrehsicher und axialbeweglich an dem zweiten Bauteil gelagert. Mit anderen Worten ist es möglich, den Adapter bezüglich des zweiten Bauteils entlang der Achse zumindest geringfügig zu bewegen, wobei insbesondere eine maximale Weglänge mittels eines Anschlags beschränkt ist. Alternativ hierzu ist keine Einschränkung der maximalen Weglänge vorhanden. Vorzugsweise ist es hierbei möglich, den Adapterring, und somit auch in den Außenring, bezüglich des zweiten Bauteils entlang der Achse um maximal 1 cm, 5 mm oder 1 mm zu bewegen. Hierbei ist der Adapterring verdrehsicher an dem zweiten Bauteil gelagert, sodass aufgrund der Verdrehsicherung eine Rotationsbewegung des Adapterrings und somit auch des Außenrings bezüglich des zweiten Bauteils um die Achse verhindert ist.

Aufgrund der Ausgestaltung der Lagereinheit ist eine axiale Bewegung des Wälzlagers bezüglich des zweiten Bauteils möglich, sodass ein Loslager gebildet ist. Infolgedessen ist es möglich, eine unterschiedliche Ausdehnung, beispielsweise aufgrund eines Wärmeeintrag, der ersten Bauteil sowie des zweiten Bauteils und/oder der Komponenten, an denen das zweite Bauteil befestigt ist, auszugleichen, ohne dass eine Reibung in dem Wälzlager übermäßig erhöht wird und/oder mechanische Spannungen auftreten. Somit ist eine Haltbarkeit erhöht. Aufgrund der drehsicheren Lagerung des Adapterrings an dem Außenring ist hierbei auch bei vergleichsweise hohen Drehgeschwindigkeiten des ersten Bauteils bezüglich des zweiten Bauteils im Wesentlichen kein Abrieb oder sonstiger Verschleiß zwischen dem Adapterring und dem zweiten Bauteil auf, was einen Verschleiß des Adapterrings und des zweiten Bauteils verringert. Auch sind somit im Wesentlichen keine Abriebpartikel im Bereich der Lagereinheit vorhanden, die sich beispielsweise zwischen dem Außenring und dem Innenring anlagern und somit eine Funktionsweise des Wälzlagers beeinträchtigen könnten. Somit ist auch deswegen eine Haltbarkeit erhöht.

Aufgrund der Verwendung des Adapterrings ist es möglich, für das Wälzlager ein Standardbauteil zu verwenden. Mit anderen Worten sind keine besonderen Vorgaben für das Wälzlager vorhanden. Somit sind einerseits Herstellungskosten des Wälzlagers verringert. Andererseits ist aufgrund der Möglichkeit der Verwendung von Standardbauteilen eine Verfügbarkeit erhöht. Mit anderen Worten ist eine Lieferzeit für das Wälzlager verringert, sodass die Lagereinheit im Wesentlichen ohne weitere Beschränkungen hergestellt werden kann. Lediglich der Adapterring ist entsprechend anzufertigen, wobei an diesen, im Vergleich zu dem Wälzlager, vergleichsweise geringe Anforderungen bestehen.

Das zweite Bauteil weist insbesondere eine Aussparung auf, innerhalb derer das Wälzlager zumindest teilweise angeordnet ist, insbesondere der Innenring. Vorzugsweise ragt das erste Bauteil durch die Aussparung hindurch, und das erste Bauteil wird mittels des zweiten Bauteils zumindest abschnittsweise umfangsseitig umgeben. Insbesondere umgibt der Adapterring den Außenrings umfangsseitig. Mit anderen Worten ist der Adapterring von dem Außenring bezüglich der Achse nach außen wegversetzt.

Der Adapterring ist beispielsweise aus mehreren unterschiedlichen Komponenten gefertigt, die zusammengesetzt sind, beispielsweise mittels Klebens oder eines oder mehrerer Befestigungselemente, wie Schrauben. Beispielsweise erfolgt hierbei zur Befestigung des Adapterrings an dem Außenring ein Zusammenfügen der Komponenten. Besonders bevorzugt jedoch ist der Außenring einstückig, weswegen eine Robustheit erhöht ist. Zum Beispiel wird ein oder mehrerer Befestigungsmittel, wie Schrauben, verwendet, um den Adapterring an dem Außenring zu befestigen. In einer Alternative ist der Adapterring nach Art einer Schelle ausgestaltet, die um den Außenring gespannt wird, wobei zweckmäßigerweise ein entsprechendes Befestigungsmittel verwendet wird. In einer weiteren Alternative erfolgt die Befestigung des Adapterrings an dem Außenring mittels eines Klebers. Besonders bevorzugt jedoch ist der Adapterring auf den Außenring aufgeschrumpft. Hierfür wird beispielsweise der Adapterring auf eine vergleichsweise hohe Temperatur erwärmt, sodass sich dieser ausdehnt. Anschließend wird der Adapterring bezüglich des Außenrings geeignet positioniert und abgekühlt, sodass sich dessen Ausdehnung verringert und eine kraftschlüssige Verbindung zwischen diesen erstellt ist. Geeigneterweise ist vor Montage der Innendurchmesser des Adapterrings geringfügig kleiner als der Außendurchmesser des Außenrings. Aufgrund einer derartigen Befestigung sind keine zusätzlichen Befestigungsmittel erforderlich, was Herstellungskosten reduziert. Zudem ist das Ausbilden einer Unwucht vermeidet. Ferner erfolgt auf diese Weise keine Beschädigung des Außenrings und folglich keine strukturelle Schwächung des Wälzlagers, weswegen eine Haltbarkeit erhöht ist.

Zum Beispiel umgibt der Adapterring den Außenring lediglich umfangsseitig. Besonders bevorzugt jedoch ist der Außenring mittels des Adapterrings umgegriffen. Somit steht der Adapterring bezüglich des Außenrings in Axialrichtung, also in einer Richtung parallel zur Achse, zumindest teilweise über, vorzugsweise lediglich einseitig. Auch ich dabei der Überstand derart ausgebildet, dass dieser an der Stirnseite des Außenrings anliegt. Zusammenfassend ist der Querschnitt des Adapterrings entlang der Achse zumindest teilweise L-förmig. Infolgedessen ist hier ein Anschlag gebildet, mittels dessen die Position des Adapterrings bezüglich des Außenrings vorgegeben ist. Somit ist eine Montage vereinfacht. Ferner erfolgt mittels des radial nach innen versetzten Teils des Adapterrings eine Stabilisierung des Adapterrings, sodass eine Robustheit erhöht ist. Insbesondere ist dabei der Überstand, und somit der Umgriff, lediglich einseitig, sodass das Einsetzen des Außenrings in den Adapterring von der dem Anschlag gegenüberliegenden Ende ermöglicht ist.

Der Adapterring weist mehrere parallel zur Achse verlaufende Fortsätze auf. Die Fortsätze sind dabei von der Achse beabstandet und insbesondere von dem Au-ßenring bezüglich der Achsen radial nach außen versetzt. Jeder der Fortsätze ist hierbei in einer korrespondierenden Aufnahme des zweiten Bauteils geführt. Insbesondere ist hierbei zwischen jedem Fortsatz und der jeweiligen Aufnahme eine Spielpassung gebildet, sodass ein Verschieben der Fortsätze in den Aufnahmen ermöglicht ist. Insbesondere ist es hierbei möglich, jeden Fortsatz in der jeweils zugeordneten Aufnahme zwischen 0,5 mm und 5 mm zu bewegen. Vorzugsweise ist eine Beweglichkeit der Fortsätze in der jeweiligen Aufnahme auf unter 2 mm oder beispielsweise auf 1 mm begrenzt. Mit anderen Worten weist jede der Aufnahmen eine Tiefe auf, die insbesondere um 1 mm tiefer als die Länge des jeweiligen Fortsatzes ist.

Mittels der Fortsätze sowie der Aufnahmen erfolgt die axialbewegliche Lagerung des Adapterrings an dem zweiten Bauteil, wobei aufgrund der Spielpassung zwischen den Aufnahmen und der Fortsätze die Verdrehsicherung realisiert ist. Somit ist eine vergleichsweise kostengünstig Anbindung des Adapterrings an dem zweiten Bauteil realisiert. Dabei ist es möglich, ein bereits vorhandenes zweite Bauteil zu verwenden, in das entsprechende Aufnahmen eingebracht werden. Somit ist eine bereits vorhandene Konstruktion für das zweite Bauteil verwendbar, und es ist nicht erforderlich, entsprechende Gussformen oder Werkzeuge für das zweite Bauteil anzufertigen. Somit sind Herstellungskosten für das zweite Bauteil verringert. Zusammenfassend erfolgt die Ertüchtigung des zweiten Bauteils zur verdrehsicheren und axialbeweglichen Lagerung des Adapterrings daran mittels einer Materialabtragung. Beispielsweise sind die Aufnahmen umfangsseitig geschlossen ausgestaltet oder vorzugsweise zumindest einseitig parallel zur Achse geschlitzt. Somit ist ein Entweichen von Luft aus den Aufnahmen ermöglicht und ein Ausbilden eines Luftpolsters in den Aufnahmen vermieden, die anderweitig zu einer Einschränkung der axialen Beweglichkeit führen könnten.

Vorzugsweise sind zumindest zwei derartige Fortsätze sowie zwei Aufnahmen vorhanden, sodass eine vergleichsweise robuste Verdrehsicherung gegeben ist. Alternativ hierzu ist lediglich ein einziger derartiger Fortsatz und eine einzige entsprechende Aufnahme vorhanden. Vorzugsweise ist die Anzahl der Fortsätze und der entsprechenden Aufnahmen kleiner als 10 oder 5. Somit ist sind Herstellungskosten reduziert und eine Konstruktion vereinfacht. Auch ist ein Platzbedarf verringert. Zweckmäßigerweise sind drei derartige Fortsätze und korrespondierende Aufnahmen vorhanden, sodass ein Verkippen des Adapterrings bezüglich des zweiten Bauteils vermieden ist, wobei dennoch die Anzahl der Aufnahmen und Fortsätze vergleichsweise gering ist. Insbesondere sind die Fortsetzung und Aufnahmen drehsymmetrisch bezüglich der Achse angeordnet, sodass zwischen diesen jeweils ein Winkel von 120° bezüglich der Achse gebildet ist. Somit ist eine Stabilität erhöht.

Der Adapterring weist eine radial von dem Außenring wegweisende, umlaufende Wulst auf. Die Wulst erstreckt sich hierbei nicht entlang der vollständigen Ausdehnung des Adapterrings in der axialen Richtung, sondern ist im Vergleich hierzu verkürzt. Insbesondere ist die Wulst einem der Enden des Adapterrings in Axialrichtung (axialer Richtung) zugeordnet und bildet insbesondere dieses. An der Wulst sind die Fortsätze befestigt. Sofern mittels des Adapterrings der Außenring umgriffen ist, ist die Wulst vorzugsweise gegenüber dem radial nach innen geführten Überstand angeordnet, sodass der Querschnitt des Adapterrings in Axialrichtung zumindest teilweise im Wesentlichen T-förmig ist. Aufgrund der Wulst wird mittels der Fortsätze die Befestigung des Adapterrings an dem Außenring nicht beeinträchtigt, sodass eine Stabilität erhöht ist.

Beispielsweise sind die Fortsätze zunächst separate Bauteile, die an der Wulst befestigt werden. Auf diese Weise ist es möglich, für die Fortsätze sowie die weiteren Bestandteile des Adapterrings unterschiedliche Materialien zu verwenden, die insbesondere auf die jeweilige Verwendung angepasst sind. Insbesondere weist die Wulst hierfür entsprechende Löcher oder Bohrungen auf, in die die Fortsätze eingesetzt sind, die zum Beispiel nach Art von Stiften ausgestaltet sind. Zum Beispiel sind die Fortsätze in die Löcher eingeschraubt oder eingepresst. Alternativ hierzu sind die Fortsätze mit der Wulst verklebt.

Bevorzugt sind die Fortsätze nach Art einer Nase ausgestaltet und insbesondere an die Wulst sowie weitere Bestandteile des Adapterrings angeformt. Mit anderen Worten werden insbesondere die Fortsätze mit den weiteren Bestandteilen des Adapterrings oder zumindest der Wulst urgeformt. Aufgrund der Einstückigkeit sind eine Robustheit erhöht und insbesondere eine Herstellungszeit verkürzt. Mittels der Wulst erfolgt eine Stabilisierung der zweckmäßigerweise auch an weiteren Bestandteilen des Außenrings befestigten Fortsätze, sodass eine Robustheit erhöht ist.

Besonders bevorzugt weist der Adapterring eine Gewindebohrung auf, die zweckmäßigerweise parallel zur Drehachse verläuft. Die Gewindebohrung weist ein Innengewinde auf. Insbesondere ist die Gewindebohrung in die etwaige vorhandene Wulst eingebracht, sodass diese bezüglich des Außenrings von der Achse weg versetzt ist. Die Gewindebohrung ist insbesondere deckungsgleich zu einem Loch des zweiten Bauteils angeordnet, das insbesondere ebenfalls parallel zur Achse verläuft. Hierbei entspricht der Durchmesser des Lochs zumindest dem Durchmesser der Gewindebohrung oder ist größer. Somit es möglich, durch das zweite Bauteil eine Gewindestange in die Gewindebohrung des Adapterrings einzudrehen. Insbesondere ist das Loch innenseitig glatt ausgestaltet, sodass mittels des Lochs eine Beweglichkeit der Gewindestange nicht behindert wird.

Mittels der Gewindestange wird die Position des Adapterrings bezüglich des Lochs und somit bezüglich des zweiten Bauteils vorgegeben, und eine Montage des Adapterrings an dem zweiten Bauteil ist somit lediglich in einer vorbestimmten Position möglich. In dieser greift insbesondere der Adapterring in entsprechenden Konturen des zweiten Bauteils ein, insbesondere greifen die Fortsätze in die entsprechenden Aufnahmen ein, sodass auf diese Weise eine axialbewegliche Lagerung des Adapterrings an dem zweiten Bauteil erfolgt. Zusammenfassend wird beispielsweise bei Montage mittels der Gewindestange der Adapterring bezüglich des zweiten Bauteils ausgerichtet. Alternativ oder in Kombination hierzu erfolgt mittels der Gewindestange teilweise die axiale verschiebliche und verdrehsichere Lagerung des Adapterrings bezüglich des zweiten Bauteils.

Das Verfahren dient der Herstellung einer Baueinheit, die eine Lagereinheit aufweist. Die Lagereinheit umfasst ein Wälzlager, das einen Außenring und einen hierzu um eine Achse drehbaren Innenring umfasst. Der Innenring ist im Montagezustand an einem ersten Bauteil und der Außenring an einem Adapterring befestigt. Der Adapterring ist verdrehsicher und axialbeweglich an einem zweiten Bauteil gelagert. Der Adapterring weist eine Gewindebohrung auf, die im Montagezustand deckungsgleich zu einem Loch des zweiten Bauteils angeordnet ist. Die Baueinheit ist hierbei beispielsweise ein Elektromotor, ein Teil eines Elektromotors oder zum Beispiel ein Getriebe oder ein Teil eines Getriebes.

Das Verfahren sieht vor, dass das erste Bauteil bereitgestellt wird, an dem das Wälzlager befestigt ist. Insbesondere ist das erste Bauteil eine Welle, die zum Beispiel aus einem Stahl erstellt ist. Insbesondere ist der Innenring des Wälzlagers auf das erste Bauteil, also zum Beispiel die Welle, aufgeschrumpft. An dem Au-ßenring ist der Adapterring bereits befestigt. Der Adapterring ist dabei noch nicht an dem zweiten Bauteil gelagert, und dieses ist insbesondere separat von dem Adapterring.

In einem weiteren Arbeitsschritt wird in die Gewindebohrung eine Gewindestange eingedreht. Beispielsweise erfolgt dieser Arbeitsschritt vor Befestigung des Adapterrings an dem Außenring und/oder vor Befestigung des Wälzlagers an dem ersten Bauteil. Besonders bevorzugt jedoch wird die Gewindestange erst nach der Befestigung des Wälzlagers an dem ersten Bauteil sowie der Befestigung des Adapterrings an dem Außenring in die Gewindebohrung eingedreht, sodass die Befestigung der einzelnen Komponenten aneinander durch die Anwesenheit der Gewindestange nicht behindert wird. Zum Beispiel wird die Gewindestange vollständig in die Gewindebohrung eingedreht oder zweckmäßigerweise lediglich in dem Umfang, ab dem ein selbstständiges Ablösen der Gewindestange von der Gewindebohrung unterbleibt. Somit ist ein Arbeitsaufwand verringert.

Nachfolgend wird die Gewindestange durch das Loch des zweiten Bauteils geführt. Dabei wird insbesondere auch das erste Bauteil durch eine Aussparung des zweiten Bauteils hindurchbewegt, innerhalb derer im Montagezustand zweckmäßigerweise auch zumindest teilweise der Innenring angeordnet ist. Aufgrund des Führens der Gewindestange durch das Loch, insbesondere in Verbindung mit der Positionierung des ersten Bauteils bezüglich des zweiten Bauteils, wird der Adapterring bezüglich des zweiten Bauteils ausgerichtet und derart angeordnet, dass dieser verdrehsicher und axialbeweglich an dem zweiten Bauteil gelagert wird. Aufgrund der Drehbarkeit des Außenrings bezüglich des Innenring ist zum Ausrichten im Wesentlichen kein Kraftaufwand erforderlich. Mit anderen Worten wird aufgrund der Gewindestange der Adapterring derart ausgerichtet, dass beispielsweise die etwaigen Fortsätze in die korrespondierenden Aufnahmen eingreifen oder zumindest die entsprechende Lagerung des Adapterrings an dem zweiten Bauteil erfolgt. Beispielsweise wird hierfür der Adapterring mit dem zweiten Bauteil verrastet.

In einem weiteren Arbeitsschritt wird das zweite Bauteil an einer weiteren Komponente befestigt, wie insbesondere einem Gehäuse oder einen Bestandteil eines Gehäuses. Beispielsweise wird das zweite Bauteil mit der weiteren Komponente verschraubt oder verschweißt. Zum Beispiel erfolgt mittels der Befestigung des zweiten Bauteils an der weiteren Komponente eine Begrenzung einer axialen Verschieblichkeit des Adapterrings bezüglich des zweiten Bauteils. Nachfolgend wird insbesondere die Gewindestange aus der Gewindebohrung und dem Loch entfernt. Somit ist es möglich, die Gewindestange zur Fertigung einer weiteren Baueinheit zu verwendenden. Zweckmäßigerweise wird nach Entfernen der Gewindestange das Loch verschlossen. Insbesondere betrifft die Erfindung auch eine derartige Baueinheit, die beispielsweise ein Getriebe, ein Bestandteil eines Getriebes, ein Elektromotor oder ein Bestandteil eines Elektromotors ist.

Der Elektromotor ist beispielsweise ein Bestandteil einer Industrieanlage, vorzugsweise eines Aktors, der zum Herstellen und/oder Bearbeiten eines Werkstücks geeignet, insbesondere vorgesehen und eingerichtet, ist. Zum Beispiel ist der Elektromotor ein Bestandteil einer Spitzgussmaschine und weist insbesondere eine Leistung größer als 10 kW oder 20 kW auf. Geeigneterweise ist die Leistung des Elektromotors geringer als 200 kW.

Der Elektromotor weist eine Lagereinheit mit einem Wälzlager auf, das einen Außenring und einen hierzu um eine Achse drehbaren Innenring umfasst. Der Innenring ist an einem ersten Bauteil und der Außenring an einem Adapterring befestigt. Der Adapterring ist verdrehsicher und axialbeweglich an einem zweiten Bauteil gelagert. Das erste Bauteil ist mittels einer Welle und das zweite Bauteil mittels eines Lagerschilds des Elektromotors gebildet.

Bevorzugt ist das Lagerschild ein A-seitiges Lagerschild, und mittels der Lagereinheit ist insbesondere ein Loslager gebildet. Vorzugsweise ist die Welle mittels eines weiteren Lagers gelagert, wobei dieses Lager zweckmäßigerweise als Festlager ausgestaltet ist, das an dem B-seitigen Lagerschild befestigt ist. Vorzugsweise umfasst der Elektromotor ein Gehäuse des, das insbesondere hohlzylindrisch ausgestaltet ist, und das sich zwischen den beiden Lagerschilden erstreckt. Geeigneterweise bildet das Gehäuse eine weitere Komponente, an der das B-seitige Lagerschild, vorzugsweise auch das A-seitige Lagerschild, befestigt ist. Somit bildet der Elektromotor eine Baueinheit, wobei zweckmäßigerweise das A-seitige Lagerschild ein Loch aufweist, das deckungsgleich zu einer Gewindebohrung des Adapterrings angeordnet ist. Auf diese Weise ist eine Herstellung des Elektromotors gemäß dem Verfahren ermöglicht. So ist es insbesondere möglich, das Gehäuse mit dem daran bereits befestigen B-seitigen Lagerschild bereitzustellen, wobei die Welle mit einem etwaigen Rotor in das Gehäuse bereits eingesetzt ist. Zum Verschließen des Gehäuses wird das A-seitige Lagerschild verwendet, wobei die Montage mittels der Gewindestange erfolgt. Somit erfolgt eine entsprechende Ausrichtung des Lagereinheit von außerhalb des Gehäuses, und das Gehäuse kann somit vergleichsweise stabil ausgestaltet werden. Insbesondere wird nach Entfernen der Gewindestange das Loch verschlossen, beispielsweise mittels eines Stopfens. Somit ist ein Eindringen von Fremdpartikeln in das Gehäuse des Elektromotors vermieden.

Die im Zusammenhang mit der Lagereinheit erläuterten Weiterbildungen und Vorteile sind sinngemäß auch auf das Verfahren / die Baueinheit / den Elektromotor sowie untereinander zu übertragen und umgekehrt.

Nachfolgend werden Ausführungsbeispiele der Erfindung anhand einer Zeichnung näher erläutert. Darin zeigen:
- Fig. 1: in einer perspektivischen Schnittdarstellung ausschnittsweise einen, eine Baueinheit bildenden Elektromotor, die eine Lagereinheit umfasst,
- Fig. 2: perspektivisch einen Adapterring der Lagereinheit,
- Fig. 3: perspektivisch den an einem Wälzlager der Lagereinheit montierten Adapterring,
- Fig. 4: perspektivisch ein Lagerschild des Elektromotors, das ein zweites Bauteil der Lagereinheit bildet,
- Fig. 5: ein Verfahren zur Herstellung der Baueinheit,
- Fig. 6: perspektivisch eine alternative Ausführungsform des Adapterrings,
- Fig. 7: ausschnittsweise den an einem angepassten zweiten Bauteil gelagerten Adapterring gemäß Fig. 6,
- Fig. 8: perspektivisch eine weitere Ausführungsform des Adapterrings,
- Fig. 9: perspektivisch den an dem Wälzlager der Lagereinheit montierten Adapterring gemäß Fig. 8, und
- Fig. 10: in einer Schnittdarstellung ausschnittsweise den Elektromotor mit dem Adapterring gemäß Fig. 8.

Einander entsprechende Teile sind in allen Figuren mit den gleichen Bezugszeichen versehen.

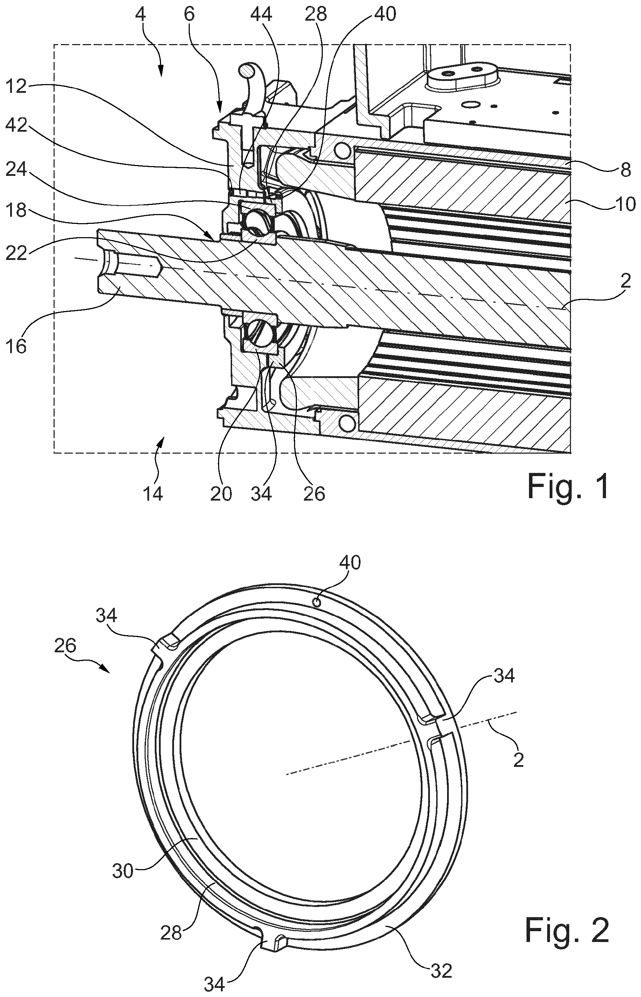

In Figur 1 ist in einer Schnittdarstellung entlang einer Achse 2 ein Elektromotor 4 ausschnittsweise perspektivisch gezeigt. Der Elektromotor 4 weist eine Leistung von 100 kW auf und ist im Montagezustand ein Bestandteil einer Spritzgussmaschine. Der Elektromotor 4 umfasst eine Baueinheit 6 mit einer weiteren Komponente 8, nämlich einem hohlzylindrisch ausgestalteten Gehäuse, das entlang der Achse 2 angeordnet ist, wobei sich die Achse 2 im Wesentlichen mittig durch das Gehäuse reicht. Innerhalb des Gehäuses, also der weiteren Komponente 8, ist ein Stator 10 angeordnet, der mittels der weiteren Komponente 8 geschützt ist.

An der weiteren Komponente 8 ist ein zweites Bauteil 12 der Baueinheit 6 befestigt, nämlich ein A-seitiges Lagerschild. Das zweite Bauteil 12 ist, ebenso wie die weitere Komponente 8 aus einem Aluminium gefertigt. Das zweite Bauteil 12 ist Bestandteil einer Lagereinheit 14, die ferner ein erstes Bauteil 16, nämlich eine Welle, aufweist, die konzentrisch zur Achse 2 angeordnet ist, und sich entlang dieser erstreckt. Das erste Bauteil 16 ist aus einem ungehärteten Stahl erstellt, und durch eine Aussparung 18 des zweiten Bauteils 12 geführt.

Innerhalb der Aussparung 18 ist zudem teilweise ein Wälzlager 20 angeordnet, das einen Innenring 22 aufweist, der bezüglich eines Außenrings 24 des Wälzlagers 20 drehbar ist. Der Innenring 22 und der Außenring 24 sind konzentrisch zur Achse 2 angeordnet, und der Außenring 24 umgibt umfangsseitig den Innenring 22. Zwischen diesen sind nicht näher dargestellte Wälzkörper angeordnet, nämlich in diesem Beispiel mehrere nicht dargestellte Kugeln, mittels derer der mechanische Kontakt zwischen dem Innenring 22 und dem Außenring 24 erfolgt. Die Wälzkörper sind aufgrund eines teilweisen Formschluss zwischen dem Innenring 22 und dem Außenring 24 gehalten, sodass eine axiale Bewegung dieser zueinander, also parallel zur Achse 2, nicht möglich ist. Dabei ist es möglich, für das Wälzlager 20 ein Standardbauteil zu verwenden.

Der Innenring 22 ist an dem erste Bauteil 16, nämlich der Welle, befestigt, beispielsweise mittels Aufschrumpfens. Somit ist eine Bewegung des Innenrings 22 bezüglich des ersten Bauteils 16, im Besonderen entlang der Achse und auch eine Rotation des Innenrings 22 um die Achse 2, unterbunden.

Der Außenring 24 ist umfangsseitig von einem Adapterring 26 umgeben, der in Figur 2 perspektivisch von Seiten des Wälzlagers 20 dargestellt ist. Der Adapterring 26 ist aus einem Stahl oder Aluminium gefertigt und weist einen hohlzylindrisch ausgestalteten Körper 28 auf, der im Montagezustand den Außenring 24 umfangsseitig umgibt und an diesem anliegt. Hierbei ist die Ausdehnung des Adapterrings 26 in axialer Richtung, also parallel zur Achse 2, geringer als die Ausdehnung des Außenrings 24. An dem Körper 28 ist ein Übergriff 30 angeformt, also ein Überstand, der auf die Achse 2 hin gebogen oder versetzt ist. Der Übergriff 30 ist scheibenartig und konzentrisch zur Achse 2 angeordnet, sodass der Übergriff 30 einen Anschlag für den Außenring 24 bildet, an dem dieser stirnseitig anliegt. Folglich ist der Außenring 24 mittels des Adapterrings 26 umgegriffen.

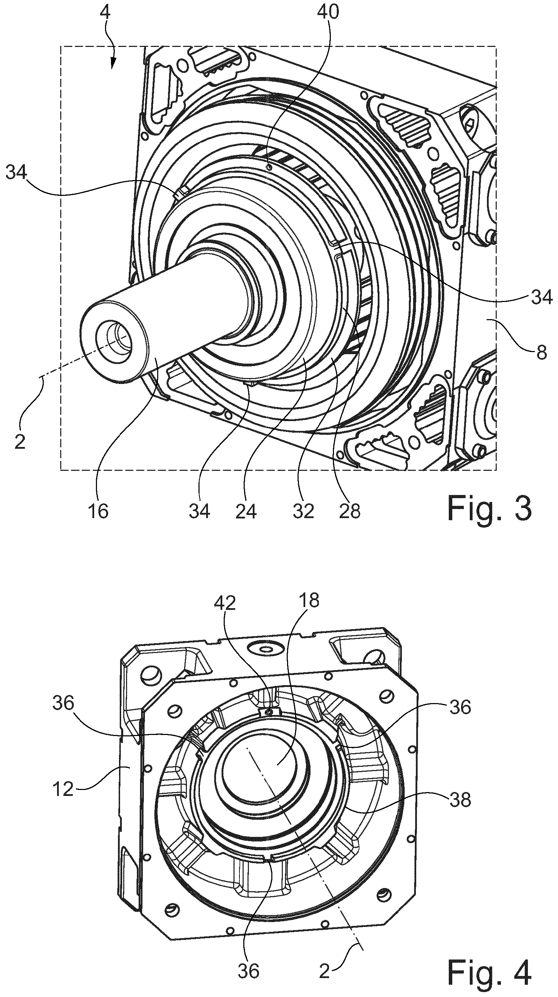

Der Adapterring 26 ist an dem Außenring 24 befestigt, sodass eine Relativbewegung dieser zueinander nicht möglich ist, wie auch in Figur 3 perspektivisch dargestellt, wobei das zweite Bauteil 12, nämlich das Lagerschild des Elektromotors 4, nicht gezeigt ist. Zur Befestigung wird der Adapterring 26 auf den Außenring 24 aufgeschrumpft. Hierfür wird zunächst der Außenring 26 erwärmt, sodass sich dessen Durchmesser weitet, nämlich insbesondere der Durchmesser des Körpers 28. Anschließend wird das Wälzlager 20 und somit der Außenring 24 in den Körper 28 von der dem Übergriff 30 abgewandten Seite in Axialrichtung eingesetzt, bis der Außenring 24 an dem Übergriff 30 anliegt. Nachfolgend wird der Adapterring 26 erneut abgekühlt, sodass sich dieser wiederum zusammenzieht und kraftschlüssig an dem Außenring 24 anliegt. Somit erfolgt bei der Befestigung keine strukturelle Schwächung des Wälzlagers 20.

Dem Übergriff 30 gegenüber, nämlich radial nach außen versetzt, ist eine Wulst 32 des Adapterrings 26 angeordnet, die ebenfalls scheibenförmig ausgestaltet ist. Mit anderen Worten weist die Wulst 32 radial von der Achse 2 und somit auch von dem Außenring 24 weg, und die Wulst 32 ist umlaufen ausgestaltet. Somit ist der Querschnitt des Adapterring 26 entlang der Achse 2 teilweise T-förmig. Zudem weist der Adapterring 26 insgesamt drei Fortsätze 34 auf, die nasenartig ausgestaltet sind, und die sich parallel zur Achse 2 erstrecken. Hierbei ist jeder der im Wesentlichen quaderförmigen Fortsätze 34 bündig zu dem Ende der Wulst 32 in radialer Richtung bezüglich der Achse 2 und bündig zu einem der Enden des Körpers 28 in der axialen Richtung. Die Fortsätze 34 sind dabei an dem Körper 28 und der Wulst 32 angeformt, und der vollständige Außenring 26 ist einstückig.

Das zweite Bauteil 12, nämlich das Lagerschild, weist drei parallel zur Achse 2 verlaufende Aufnahmen 36 auf, wie in Figur 4 perspektivisch von Seiten der weiteren Komponente 8 dargestellt. Die Aufnahmen 39 sind in einen hohlzylindrischen Kragen 38 des zweiten Bauteils 12 sind, der die Aussparung 18 umgibt. Die Aufnahmen 36 sind hierbei im Wesentlichen mittels parallel zur Achse 2 verlaufender Schlitze des Kragens 38 gebildet. Im Montagezustand liegt jeweils einer der Fortsätze 34 in einem der Kragen 36 ein, wobei zwischen diesen eine Spielpassung gebildet ist. Dabei ist die Ausdehnung jeder Aufnahme 36 in axialer Richtung um 1 mm größer als die Ausdehnung des jeweils zugeordneten Fortsatzes 34, sodass eine Bewegung des Adapterrings 26 bezüglich des Kragens 38 und somit auch bezüglich des zweiten Bauteils 12 in geringem Maße möglich ist. Mit anderen Worten ist jeder Fortsätze 34 jeweils einer der Aufnahmen 36 zugeordnet und mittels dieser geführt.

Zusammenfassend ist der Adapterring 26 axialbeweglich an dem zweite Bauteil 12 gelagert, wobei das Ausmaß der Beweglichkeit aufgrund der Ausgestaltung der Aufnahmen 36 sowie der Fortsätze 34 und der Wulst 32 sowie des Kragens 38 auf 1 mm begrenzt ist. Aufgrund der Spielpassung zwischen den Fortsätzen 34 und den Aufnahmen 36 ist dabei eine Drehbewegung des Adapterrings 26 bezüglich des zweite Bauteils 12 nicht möglich.

Zusammenfassend ist der Adapterring 26 verdrehsicher und axialbeweglich an dem zweiten Bauteil 12 gelagert. Daher ist auch der Außenring 24 des Wälzlagers 20 entsprechend an dem zweiten Bauteil 12 gelagert. Mit anderen Worten handelt bildet das Wälzlager 20 ein Loslager des Elektromotors 4. Dabei ist das erste Bauteil 16 mittels des Wälzlagers 20 drehbar an dem zweiten Bauteil 12 gelagert. Das Lagerschild, also das zweite Bauteil 12, ist ein A-seitiges Lagerschild, weswegen im Montagezustand auf dieser Seite des Elektromotors 4 ein anzutreibendes Bauteil angeordnet ist.

Die Fortsätze 34 und folglich auch die Aufnahmen 36 sind bezüglich der Achse 2 um jeweils 120° zueinander versetzt. Mittig zwischen zweien der Fortsätze 34 ist in die Wulst 32 eine Gewindebohrung 40 mit einem Innengewinde eingebracht. Diese ist im Montagezustand deckungsgleich mit einem parallel zur Achse 2 verlaufenden Loch 42 des zweiten Bauteils 12 angeordnet. Der Durchmesser des Lochs 42 ist dabei größer als der Durchmesser der Gewindebohrung 40, sodass die Projektion des Lochs 42 auf die Wulst 32 die Gewindebohrung 40 vollständig überdeckt. Folglich befindet sich das Loch 42 zwischen zweien der Aufnahmen 36 und schließt mit diesen einen Winkel von 60° bezüglich der Achse 2 ein. In das Loch 42 ist von der Außenseite, also von der dem Adapterring 26 gegenüberliegenden Ende, ein Stopfen 44 eingebracht, der aus einem Gummi erstellt ist. Mittels dessen ist ein Eindringen von Fremdpartikeln über das Loch 42 in das Innere des Elektromotors 4 vermieden.

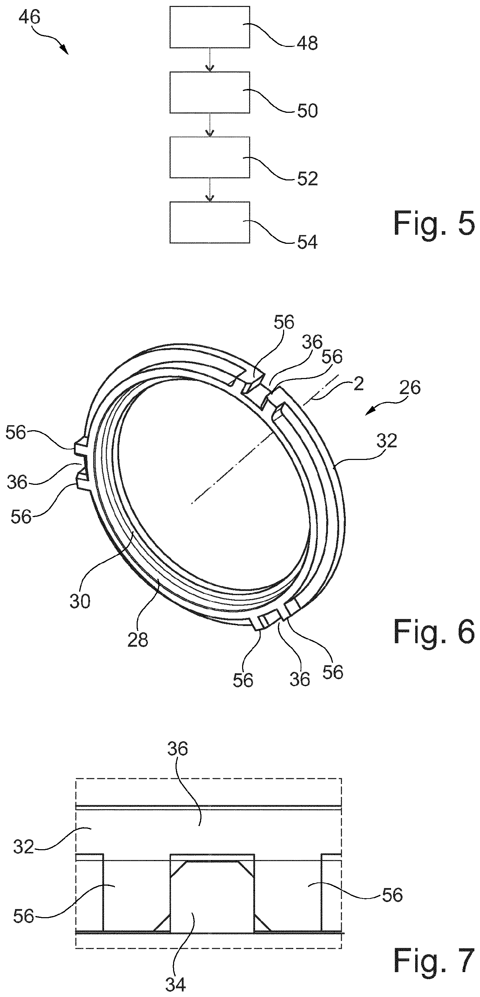

In Figur 5 ist ein Verfahren 46 zur Herstellung der Baueinheit 6 dargestellt. In einem ersten Arbeitsschritt 48 wird das erste Bauteil 16 bereitgestellt, wie in Figur 3 dargestellt. An dem ersten Bauteil 16 ist dabei das Wälzlager 20 bereits befestigt, beispielsweise mittels Aufschrumpfens, und an dem Außenring 24, also an dem Wälzlager 20 ist bereits der Adapterring 26 befestigt, beispielsweise ebenfalls mittels Aufschrumpfens. Das erste Bauteil 16 sowie ein daran befestigter Rotor sind hierbei innerhalb der weiteren Komponente 8 und dem daran befestigten Stator 10 angeordnet, und das gegenüberliegende Ende des mittels der weiteren Komponente 8 gebildeten Gehäuses ist mittels eines A-seitigen Lagerschilds verschlossen ist. Das erste Bauteil 16, also die Welle, ist dabei mittels eines an dem A-seitigen Lagerschild befestigten Lagers um die Achse 2 drehbar gelagert, wobei dieses Lager ein Festlager ist.

In einem sich anschließenden zweiten Arbeitsschritt 50 wird in die Gewindebohrung 40 von der der weiteren Komponente 8 abgewandten Seite eine Gewindestange eingedreht, die parallel zur Achse 2 angeordnet ist. Die Gewindestange erstreckt sie hierbei beispielsweise bis zum Ende der Welle, also des ersten Bauteils 16, in axialer Richtung.

In einem sich anschließenden dritten Arbeitsschritt 52 wird das zweite Bauteil 12 auf das erste Bauteil 16 sowie die Gewindestange aufgesetzt. Hierfür wird das erste Bauteil 16, als die Welle, durch die Aussparung 18 geführt, und die Gewindestange, die an dem Adapterring 26 lösbar befestigt ist, wird durch das Loch 42 des zweiten Bauteils 12, also des Lagerschilds, geführt. Folglich wird der Adapterring 26 bezüglich des zweiten Bauteils 12 in eine bestimmte Position ausgerichtet. Mit anderen Worten wird mittels der Gewindestange sichergestellt, dass die Gewindebohrung 40 deckungsgleich zu dem Loch 42 ist. Aufgrund der Ausrichtung mittels der Gewindestange gleiten bei einem weiteren Annähern des zweiten Bauteils 12 an die weitere Komponente 8 die Fortsätze 34 in die Aufnahmen 36, sodass, wenn das zweite Bauteil 12 auf die weitere Komponente 8 aufgesetzt ist, der Adapterring 26 verdrehsicher und axialbeweglich an dem zweiten Bauteil 12 gelagert ist.

In einem sich anschließenden vierten Arbeitsschritt 54 wird das zweite Bauteil 12 an der weiteren Komponente 8 befestigt, sodass ein Ablösen des zweiten Bauteils 12 von der weiteren Komponente 8 nicht möglich ist. Hierfür wird beispielsweise das Lagerschild mit dem Gehäuse verschraubt oder verschweißt. Im Anschluss wird die Gewindestange aus der Gewindebohrung 40 herausgedreht und aus dem Loch 42 entfernt, wobei die Gewindestange von dem Elektromotor 4 abgelöst wird, also auch von der Baueinheit 6. Nachfolgend wird der Stopfen 44 in das Loch 42 eingeführt, sodass der Elektromotor 4 verschlossen ist.

Zusammenfassend erfolgt bei der Lagereinheit 14 eine Lagerung des ersten Bauteils 16, nämlich der Welle, an dem zweiten Bauteil 12, also den Lagerschild, wobei eine Axialbeweglichkeit des Wälzlagers 20 vorhanden ist, sodass ein Loslager gebildet ist. Hierbei ist es möglich, für das Wälzlager 20 ein Standardbauteil zu verwenden. Bei einem bereits vorhandenen zweiten Bauteil 12 sind dabei lediglich geringe Anpassungen erforderlich, wohingegen die restlichen Bestandteile der Baueinheit 6 und des Elektromotors 4 nicht verändert werden müssen.

In Figur 6 ist perspektivisch eine alternative Ausgestaltungsform des Adapterrings 26 dargestellt, der den unveränderten Körper 28 sowie den unveränderten Übergriff 30 aufweist. Die umlaufende Wulst 32 hingegen weist drei Unterbrechungen auf, die mittels beidseitig jeweils mittels in axialer Richtung verlaufender Ränder 56 begrenzt sind, die von dem Körper 28 in radialer Richtung nach außen vorspringen. Mittels jeder Unterbrechung und den zugeordneten Ränder 56 ist jeweils eine der Aufnahmen 36 gebildet. Innerhalb jeder von diesen liegt jeweils einer der entsprechend ausgestalteten Fortsätze 34 ein, der jedoch bei dieser Ausgestaltungsform ein Bestandteil des zweiten Bauteils 12 ist, wie in Figur 7 in einer Seitenansicht dargestellt. Auch hier sind die Aufnahmen 36 und die Fortsätze 34 zueinander bezüglich der Achse 2 um jeweils 120° versetzt.

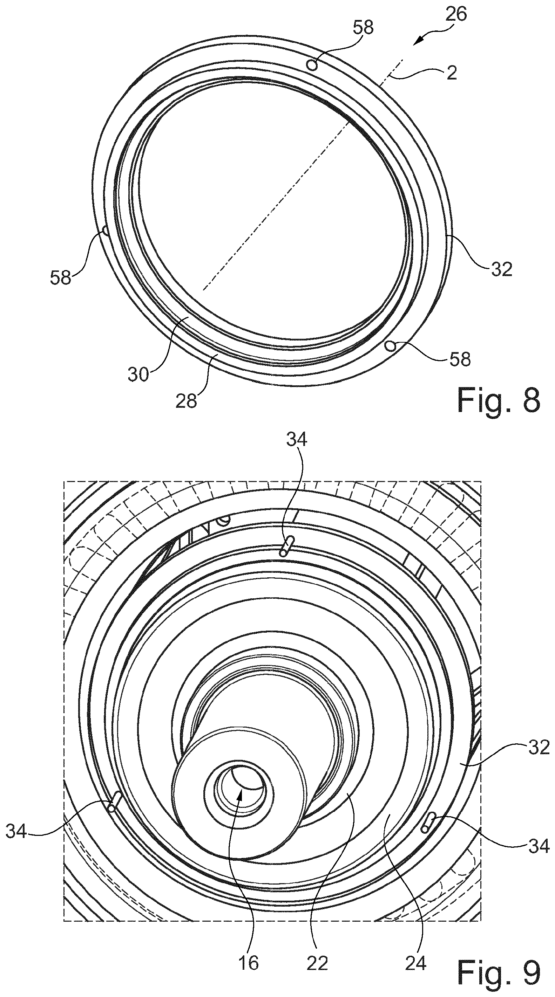

In Figur 8 ist eine weitere Ausgestaltungsform des Adapterrings 26 perspektivisch dargestellt, wobei auch hier der Körper 28 und der Übergriff 30 nicht verändert sind. Es ist wiederum die umlaufende Wulst 32 vorhanden, in die drei parallel zur Achse 2 verlaufende Löcher 58 eingebracht sind. Die Löcher 58 sind in dabei zueinander bezüglich der Achse 2 um 120° versetzt.

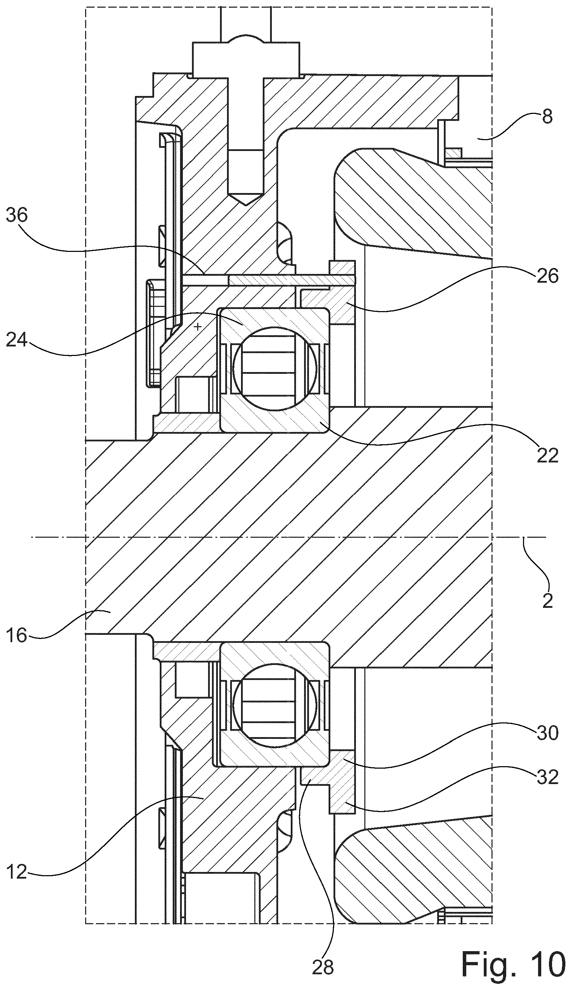

In jedes der Löcher 58 ist ein den jeweiligen Fortsatz 34 bildender Stift aus einem Stahl eingepresst, wie in Figur 9 dargestellt. Die Fortsätze 34 verlaufen parallel zur Achse 2 und liegen, wie in Figur 10 in einer Schnittdarstellung entlang der Achse 2 dargestellt, in jeweils einer der korrespondierenden Aufnahme 36 unter Ausbildung einer Spielpassung ein. Die Aufnahmen 36. sind dabei parallel zur Achse 2 verlaufende Löcher, die durch das vollständige zweite Bauteil 12 in Axialrichtung reichen.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, wie in den anhängigen Ansprüchen definiert ist, ohne den Gegenstand der Erfindung zu verlassen.

### Bezugszeichenliste

- 2: Achse
- 4: Elektromotor
- 6: Baueinheit
- 8: weitere Komponente
- 10: Stator
- 12: zweites Bauteil
- 14: Lagereinheit
- 16: erstes Bauteil
- 18: Aussparung
- 20: Wälzlager
- 22: Innenring
- 24: Außenring
- 26: Adapterring
- 28: Körper
- 30: Übergriff
- 32: Wulst
- 34: Fortsatz
- 36: Aufnahme
- 38: Kragen
- 40: Gewindebohrung
- 42: Loch
- 44: Stopfen
- 46: Verfahren
- 48: erster Arbeitsschritt
- 50: zweiter Arbeitsschritt
- 52: dritter Arbeitsschritt
- 54: vierter Arbeitsschritt
- 56: Rand
- 58: Loch

## Patentansprüche

1. Lagereinheit (14) mit einem Wälzlager (20), das einen Außenring (24) und einen hierzu um eine Achse (2) drehbaren Innenring (22) umfasst, wobei der Innenring (22) an einem ersten Bauteil (16) und der Außenring (24) an einem Adapterring (26) befestigt ist, der verdrehsicher und axialbeweglich an einem zweiten Bauteil (12) gelagert ist, wobei der Adapterring (26) mehrere parallel zur Achse (2) verlaufende Fortsätze (34) aufweist, die in jeweils einer korrespondierenden Aufnahme (36) des zweiten Bauteils (12) geführt sind, **dadurch gekennzeichnet dass** der Adapterring (26) eine radial von dem Außenring (24) wegweisende umlaufende Wulst (32) aufweist, an der die Fortsätze (34) befestigt sind.

2. Lagereinheit (14) nach Anspruch 1,
**dadurch gekennzeichnet,**
**dass** der Adapterring (26) auf den Außenring (24) aufgeschrumpft ist.

3. Lagereinheit (14) nach Anspruch 1 oder 2,
**dadurch gekennzeichnet,**
**dass** der Außenring (24) mittels des Adapterrings (26) umgriffen ist.

4. Lagereinheit (14) nach einem der Ansprüche 1 bis 3,
**dadurch gekennzeichnet,**
**dass** der Adapterring (26) eine Gewindebohrung (40) aufweist, die deckungsgleich zu einem Loch (42) des zweiten Bauteils (12) angeordnet ist.

5. Verfahren (48) zur Herstellung einer Baueinheit (6) mit einer Lagereinheit (14) nach Anspruch 4, bei dem
- das erste Bauteil (16) bereitgestellt wird, an dem das Wälzlager (20) befestigt ist, wobei an dem Außenring (24) der Adapterring (26) befestigt ist,
- in die Gewindebohrung (40) eine Gewindestange eingedreht wird,
- die Gewindestange durch das Loch (42) geführt wird, wobei der Adapterring (26) bezüglich des zweiten Bauteils (12) derart angeordnet wird, dass dieser verdrehsicher und axialbeweglich an dem zweiten Bauteil (12) gelagert wird, und
- das zweite Bauteil (12) an einer weiteren Komponente (8) befestigt wird.

6. Elektromotor (4) mit einer Lagereinheit (14) nach einem der Ansprüche 1 bis 4, wobei das erste Bauteil (16) mittels einer Welle und das zweite Bauteil (12) mittels eines Lagerschilds gebildet ist.

## Claims

1. Bearing unit (14) having a rolling bearing (20) which comprises an outer ring (24) and an inner ring (22) which is rotatable about an axis (2) in relation to said outer ring, wherein the inner ring (22) is fastened to a first component (16) and the outer ring (24) is fastened to an adaptor ring (26) which is mounted in a rotationally secured and axially movable manner on a second component (12), wherein the adaptor ring (26) has multiple extensions (34) which extend parallel to the axis (2) and which are guided in in each case one corresponding receptacle (36) of the second component (12),
**characterized in that**
the adaptor ring (26) has an encircling bead (32) which is directed radially away from the outer ring (24) and to which the extensions (34) are fastened.

2. Bearing unit (14) according to Claim 1,
**characterized**
**in that** the adaptor ring (26) is shrunk onto the outer ring (24).

3. Bearing unit (14) according to Claim 1 or 2,
**characterized**
**in that** the outer ring (24) is engaged around by means of the adaptor ring (26).

4. Bearing unit (14) according to one of Claims 1 to 3,
**characterized**
**in that** the adaptor ring (26) has a threaded bore (40) which is arranged so as to be congruent in relation to a hole (42) in the second component (12).

5. Method (48) for producing a structural unit (6) having a bearing unit (14) according to Claim 4, in which
- the first component (16), to which the rolling bearing (20) has been fastened, is provided, wherein the adaptor ring (26) has been fastened to the outer ring (24),
- a threaded rod is screwed into the threaded bore (40),
- the threaded rod is guided through the hole (42), wherein the adaptor ring (26) is arranged in relation to the second component (12) in such a way as to be mounted in a rotationally secured and axially movable manner on the second component (12), and
- the second component (12) is fastened to a further component (8).

6. Electric motor (4) having a bearing unit (14) according to one of Claims 1 to 4, wherein the first component (16) is formed by means of a shaft and the second component (12) is formed by means of a bearing shield.

## Revendications

1. Unité de palier (14) avec un palier à roulement (20), qui comprend une bague extérieure (24) et une bague intérieure (22) pouvant être tournée par rapport à celle-ci autour d'un axe (2), la bague intérieure (22) étant fixée sur un premier composant (16) et la bague extérieure (24) étant fixée sur une bague d'adaptation (26), qui est montée de manière bloquée en rotation et de manière mobile axialement sur un deuxième composant (12), la bague d'adaptation (26) comportant plusieurs prolongements (34) s'étendant parallèlement à l'axe (2), qui sont guidés dans respectivement un logement (36) correspondant du deuxième composant (12), **caractérisée en ce que**
la bague d'adaptation (26) comporte un bourrelet (32) périphérique s'écartant radialement de la bague extérieure (24), sur lequel sont fixés les prolongements (34).

2. Unité de palier (14) selon la revendication 1,
**caractérisée en ce**
**que** la bague d'adaptation (26) est frettée sur la bague extérieure (24).

3. Unité de palier (14) selon la revendication 1 ou 2,
**caractérisée en ce**
**que** la bague extérieure (24) est entourée par la bague d'adaptation (26).

4. Unité de palier (14) selon l'une des revendications 1 à 3,
**caractérisée en ce**
**que** la bague d'adaptation (26) comporte un alésage fileté (40), qui est disposé de manière à coïncider avec un trou (42) du deuxième composant (12).

5. Procédé (48) de fabrication d'une unité structurelle (6) avec une unité de palier (14) selon la revendication 4, dans lequel
- le premier composant (16) est fourni, sur lequel est fixé le palier à roulement (20), la bague d'adaptation (26) étant fixée sur la bague extérieure (24),
- une tige filetée est vissée dans l'alésage fileté (40),
- la tige filetée est guidée à travers le trou (42), la bague d'adaptation (26) étant disposée par rapport au deuxième composant (12) de telle manière qu'elle est montée de manière bloquée en rotation et de manière mobile axialement sur le deuxième composant (12), et
- le deuxième composant (12) est fixé sur un autre composant (8).

6. Moteur électrique (4) avec une unité de palier (14) selon l'une des revendications 1 à 4, le premier composant (16) étant formé au moyen d'un arbre et le deuxième composant (12) étant formé au moyen d'un flasque.
